# EUROPEAN PATENT APPLICATION

(11) **EP 4 369 462 A1**
(43) Date of publication of application: **15.05.2024**
(21) Application number: 21949627.0
(22) Date of filing: 14.07.2021
(51) Int. Cl.: H01M 10/0587

(54) **ELECTROCHEMICAL DEVICE AND ELECTRONIC DEVICE**

(71) Applicant: Ningde Amperex Technology Limited, Ningde, Fujian 352100 (CN)
(72) Inventor: ZHOU, Weiyuan, Ningde, Fujian 352100 (CN); LONG, Hai, Ningde, Fujian 352100 (CN); DAI, Zhifang, Ningde, Fujian 352100 (CN); ZHANG, Qingwen, Ningde, Fujian 352100 (CN)
(74) Representative: Icosa
(86) International application number: PCT/CN2021/106317
(87) International publication number: WO 2023/283835

(57) **Abstract**

An electrochemical apparatus and electronic apparatus are provided. The electrochemical apparatus includes a battery cell (10) formed by a first electrode plate (100), a separator (200), and a second electrode plate (300) through winding, where the first electrode plate (100) includes a current collector (110), a tab (120), and an active substance layer (130). The current collector (110) includes a first surface (111) facing toward the interior of the battery cell (10) and a second surface (112) facing away from the interior of the battery cell (10); the tab (120) is electrically connected to the current collector (110) and extends out of the current collector (110); and the active substance layer (130) is provided on the first surface (111) and the second surface (112) of the current collector (110). A winding start end of the first electrode plate (100) is provided as a single-sided zone (101), an insulating coating (140) is provided on the first surface (111) of the current collector (110) located in the single-sided zone (101), and the active substance layer (130) is provided on the second surface (112) of the current collector (110) located in the single-sided zone (101).

## Description

### TECHNICAL FIELD

Embodiments of this application relate to the field of battery technologies, and in particular, to an electrochemical apparatus and an electronic apparatus.

### BACKGROUND

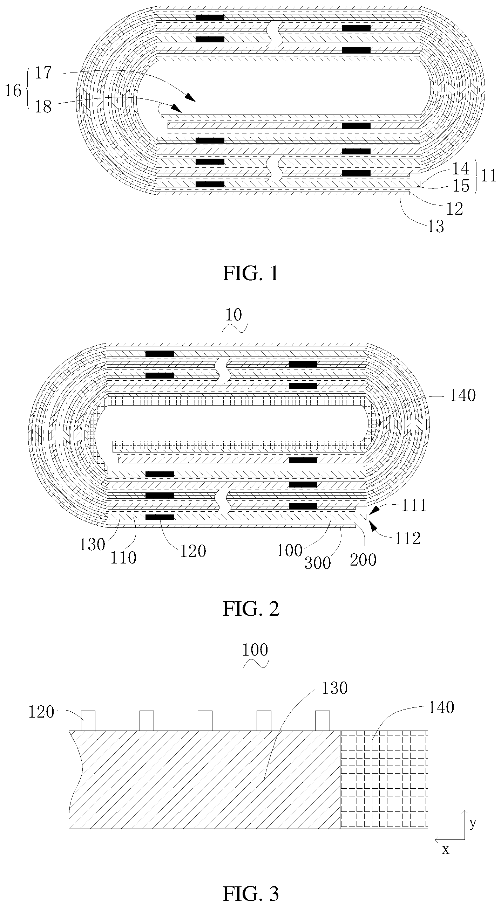

As shown in FIG. 1, at present, a wound battery cell is typically formed by an anode electrode plate 11, a separator 12, and a cathode electrode plate 13 through winding and stacking. The anode electrode plate 11 has a foil free zone 17 and a single-sided zone 18 at a winding start end 16, where no active substance layer 15 is provided on any surface of the current collector 14 located in the foil free zone 17, no active substance layer 15 is provided on one surface of the current collector 14 located in the single-sided zone 18 facing toward the interior of the battery cell, and an active substance layer 15 is provided on the other surface of the current collector 14 facing the anode electrode plate 13. As the single-sided zone of the anode electrode plate 12 has an active substance layer 15 on only one side, it is prone to have folds during winding. Therefore, to reduce the folds, a common practice in the industry is to prolong the length of the foil free zone of the anode electrode plate or to provide a strengthening rib in the foil free zone. However, none of the foregoing solutions can well solve the problem of folds at the winding start end of the anode electrode plate during winding. In addition, in the process of preparing an electrode plate of the battery cell shown in FIG. 1, due to the existence of the single-sided zone and the foil free zone, battery cell A and battery cell B will be prepared, resulting in low production efficiency.

### SUMMARY

In view of the preceding problem, embodiments of this application provide an electrochemical apparatus capable of better solving the problem of folds easily arose at the winding start end of the electrode plate, and an electronic apparatus to which the electrochemical apparatus is applied.

According to an aspect of this application, this application provides an electrochemical apparatus including a battery cell formed by a first electrode plate, a separator, and a second electrode plate through winding, where the first electrode plate includes: a current collector, including a first surface facing toward the interior of the battery cell and a second surface facing away from the interior of the battery cell; a tab, electrically connected to the current collector and extending out of the current collector; and an active substance layer, provided on the first surface and the second surface of the current collector. A winding start end of the first electrode plate is provided as a single-sided zone, an insulating coating is provided on the first surface of the current collector located in the single-sided zone, and the active substance layer is provided on the second surface of the current collector located in the single-sided zone.

The winding start end of the electrode plate is provided as the single-sided zone and the insulating coating is provided on the single-sided zone, such that the insulating coating counteracts a curling force in the single-sided zone during winding of the battery cell, which reduces cold-pressed folds in the single-sided zone; and compared with the prior art, the foil free zone is eliminated, which saves the foil material and increases the energy density. Moreover, with the single-sided zone provided, there is no battery cell A and battery cell B prepared during production, which greatly improves the production efficiency.

In some embodiments of this application, the insulating coating is adjacent to or partially overlaps the active substance layer along a winding direction of the first electrode plate. In this way, the current collector at an interface between the insulating coating and the active substance layer can be prevented from being exposed, thereby ensuring the coverage of the current collector by the insulating coating and improving the safety performance of the electrode plate.

In some embodiments of this application, the insulating coating has a thickness of 1-100 µm and the active substance layer has a thickness of 25-150 µm.

In some embodiments of this application, the thickness of the insulating coating is less than or equal to the thickness of the active substance layer. In this way, the thickness of the insulating coating does not significantly affect an overall thickness of the electrode plate, and thus does not adversely affect an energy density of the electrochemical apparatus.

In some embodiments of this application, the insulating coating is provided on part of the first surface in the single-sided zone, or the insulating coating is provided on all of the first surface in the single-sided zone. In this way, the use of the insulating coating is reduced while ensuring that the folds in the single-sided zone are reduced, so as to save materials.

In some embodiments of this application, the insulating coating is distributed in a stripe or island pattern on the first surface in the single-sided zone.

In some embodiments of this application, the insulating coating includes inorganic particles and a binder, the inorganic particles including at least one of aluminum oxide, zinc oxide, calcium oxide, silicon oxide, zirconium oxide, magnesium oxide, titanium oxide, hafnium dioxide, tin oxide, ceric oxide, nickel oxide, yttrium oxide, silicon carbide, aluminum hydroxide, magnesium hydroxide, calcium hydroxide, barium sulfate, or boehmite, and the binder including at least one of homopolymer of vinylidene fluoride, copolymer of vinylidene fluoride, copolymer of hexafluoropropylene, polystyrene, polyphenylene vinylene, sodium polyethyleneate, potassium polyethyleneate, polymethyl methacrylate, polyethylene, polypropylene, or polytetrafluoroethylene.

In some embodiments of this application, the first electrode plate is an anode electrode plate.

In some embodiments of this application, the current collector has a thickness of 4-6 µm. In this way, the energy density of the electrochemical apparatus can be increased by selecting a thinner current collector in a case of reduced folds in the single-sided zone.

In some embodiments of this application, the insulating coating covers a width edge of the first electrode plate along a width direction of the first electrode plate, a blank current collector is provided between the insulating coating and the active substance layer along a length direction of the first electrode plate, and/or a portion from the insulating coating to a length edge of the first electrode plate is provided as a blank current collector. With such arrangement, while the insulating coating can already reduce the folds, the use of the insulating coating can be reduced and materials are saved, which does not excessively increase the weight of the battery cell but increases the energy density per unit weight of the battery cell.

In some embodiments of this application, the insulating coating covers a length edge of the first electrode plate along a length direction of the first electrode plate, and along a width direction of the first electrode plate, a portion from the insulating coating to a width edge of the first electrode plate is provided as a blank current collector. With such arrangement, while the insulating coating can already reduce the folds, the use of the insulating coating can be reduced and materials are saved, which does not excessively increase the weight of the battery cell but increases the energy density per unit weight of the battery cell.

According to another aspect of this application, this application further provides an electronic apparatus including the electrochemical apparatus as described above, where the electrochemical apparatus is configured to supply power to the electronic apparatus.

The electrochemical apparatus provided in this application, the winding start end of the electrode plate is provided as the single-sided zone and the insulating coating is provided on the single-sided zone, such that the insulating coating counteracts a curling force in the single-sided zone during winding of the battery cell, which reduces cold-pressed folds in the single-sided zone; and compared with the prior art, the foil free zone is eliminated, which saves the foil material and increases the energy density. Moreover, with the single-sided zone provided, there is no battery cell A and battery cell B prepared during production, which greatly improves the production efficiency.

### BRIEF DESCRIPTION OF DRAWINGS

To describe the specific embodiments of this application or the technical solutions in the prior art more clearly, the following briefly describes the accompanying drawings required for describing the specific embodiments or the prior art. In all drawings, similar components or parts are generally marked by similar reference signs. In the accompanying drawings, the components or parts are not necessarily drawn to the actual scale.
FIG. 1 is a schematic structural diagram of a conventional electrochemical apparatus;
FIG. 2 is a schematic structural diagram of an embodiment of an electrochemical apparatus of this application;
FIG. 3 is a schematic structural diagram of an embodiment of a first electrode plate of an electrochemical apparatus of this application;
FIG. 4 Is a lateral view of the first electrode plate of the electrochemical apparatus shown in FIG. 3;
FIG. 5 is a lateral view of an embodiment of a first electrode plate of an electrochemical apparatus of this application;
FIG. 6 to FIG. 12 are schematic structural diagrams of different embodiments of the first electrode plate of this application;
FIG. 13 to FIG. 16 are schematic structural diagrams of a production process of a first electrode plate of Example 1 of this application; and
FIG. 17 to FIG. 18 are schematic structural diagrams of a production process of a first electrode plate of Comparative Example 1 of this application.

### DESCRIPTION OF EMBODIMENTS

For ease of understanding this application, the following further describes this application in detail with reference to the accompanying drawings and specific embodiments. It should be noted that when an element is expressed as being "fixed" to another element, it may be directly fixed to the another element or there may be one or more elements therebetween. When an element is referred to as being "connected to" another element, it may be directly connected to the another element, or there may be one or more element in between. The terms such as "vertical", "horizontal", "left", "right", and similar expressions used in this specification are for illustration only.

Unless otherwise defined, all technical and scientific terms used in this specification shall have the same meanings as commonly understood by those skilled in the art to which this application belongs. The terms used herein in the specification of this application are merely intended to describe specific embodiments but not intended to limit this application. The term "and/or" used herein includes any and all combinations of one or more associated items that are listed.

FIG. 2 is a schematic structural diagram of an embodiment of an electrochemical apparatus of this application.

The electrochemical apparatus includes a wound battery cell 10 and a housing (not shown in the figure), where the wound battery cell is accommodated in the housing. The wound battery cell 10 is formed by a first electrode plate 100, a separator 200, and a second electrode plate 300 through stacking and winding, where the separator 200 is provided between the first electrode plate 100 and the second electrode plate 300, and the first electrode plate 100 and the second electrode plate 300 have different polarities. The first electrode plate 100 includes a current collector 110, a tab 120 electrically connected to the current collector 110 and extending out of the current collector, and an active substance layer 130 provided on a surface of the current collector. The current collector 110 has a first surface 111 facing toward the interior of the battery cell and a second surface 112 facing away from the interior of the battery cell, and the active substance layer 130 is provided on the first surface 111 and the second surface 112 of the current collector 110.

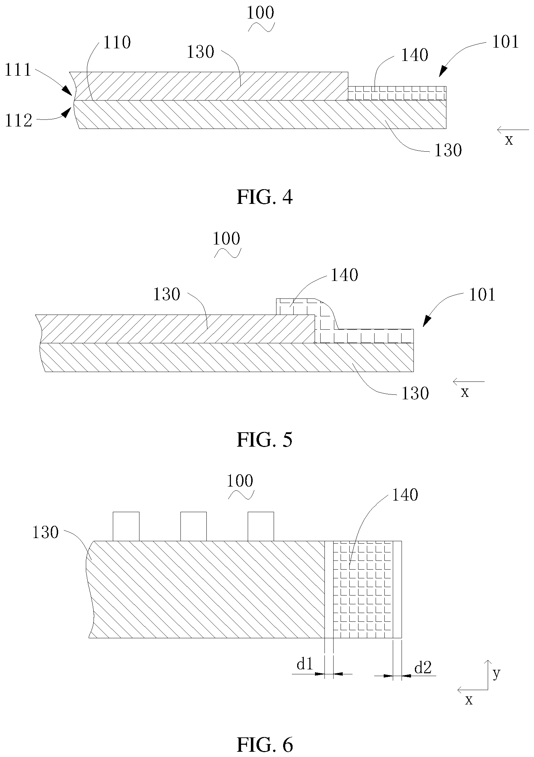

As shown in FIG. 3 and FIG. 4, a winding start end of the first electrode plate 100 is provided as a single-sided zone 101, an insulating coating 140 is provided on the first surface 111 of the current collector 110 located in the single-sided zone 101, and the active substance layer 130 is provided on the second surface 112 of the current collector 110 located in the single-sided zone 101, which may also be appreciated that the current collector 110 located in the single-sided zone 101 is provided with the active substance layer 130 on only one side and provided with the insulating coating 140 on the other side. It should be understood that the winding start end is an end at which the electrode plate begins to be wound when the electrode plate is being wound to form the wound battery cell, and is a relative concept to a winding finish end; and the winding finish end is an end at which the electrode plate ends to be wound when the electrode plate is being wound to form the wound battery cell.

The winding start end of the electrode plate 100 is provided as the single-sided zone 101 and the insulating coating 140 is provided on the single-sided zone 101, such that the insulating coating 140 counteracts a curling force in the single-sided zone 101 during winding of the battery cell, which in turn reduces cold-pressed folds in the single-sided zone 101, and a foil free zone (meaning that both sides of the current collector 110 are coated with no active substance layer) is eliminated, which saves a foil material and reduces a thickness occupied by the foil free zone, thereby increasing the energy density. In addition, the existence of the insulating coating 140 increases a contact impedance of the electrode plate when a short circuit occurs inside the battery cell, thereby reducing a discharge power and a probability of thermal runaway when the battery cell is short-circuited, and improving the safety performance of the battery cell. Moreover, in this application, one side of the current collector 110 is continuously coated, and there is no need to differentiate between battery cells A and B during winding of the electrode plate, thereby greatly improving the production efficiency.

In some embodiments of this application, as shown in FIG. 3 and FIG. 4, the insulating coating 140 and the active substance layer 130 are provided adjacent to each other in a winding direction (direction x in the figure) of the first electrode plate 100, to be specific, the insulating coating 140 and the active substance layer 130 do not overlap in a thickness direction of the electrode plate and are not spaced apart in the winding direction of the electrode plate. This can prevent a contact area between the active substance layer 130 and the insulating coating 140 from being too thick, so as not to affect a local thickness of the first electrode plate 100 and nor to adversely affect the flatness of the battery cell 10.

In some embodiments of this application, as shown in FIG. 5, the insulating coating 140 may alternatively partially overlap the active substance layer 130 in the winding direction of the first electrode plate 100, and in the overlapping zone, the active substance layer 130 is provided on the first surface 111 of the current collector 110, and the insulating coating 140 is stacked on the active substance layer 130 so as to cover part of the active substance layer 130. In this way, the current collector 110 at an interface between the insulating coating 140 and the active substance layer 130 can be prevented from being exposed, thereby ensuring the coverage of the current collector 110 by the insulating coating 140 and improving the safety performance of the electrode plate.

In some embodiments of this application, as shown in FIG. 3 and FIG. 4, the insulating coating 140 is provided on all of the first surface 111 of the current collector 110 located in the single-sided zone 101, to be specific, in the single-sided zone 101, the insulating coating 140 fully covers the first surface 111 of the current collector 110 in the length direction and the width direction of the first electrode plate 100 without exposing the blank current collector 110.

In some embodiments of this application, as shown in FIG. 6 to FIG. 12, the insulating coating 140 may alternatively be provided only on part of the first surface 111 of the current collector 110 located in the single-sided zone 101, to be specific, in the single-sided zone 101, the first surface 111 is partially covered by the insulating coating 140. With such arrangement, while the insulating coating 140 can already reduce the folds, the use of the insulating coating 140 can be reduced and materials are saved, which does not excessively increase the weight of the battery cell but increases the energy density per unit weight of the battery cell.

In some embodiments, the coverage of the insulating coating 140 is from 50% to 99.9%. For example, in some embodiments, the coverage of the insulating coating 140 is from 65% to 95%; in some embodiments, the coverage of the insulating coating 140 is from 75% to 85%; and in some embodiments, the coverage of the insulating coating 140 is 50%, 60%, 70%, 80%, 90% or in a range defined by any two of these values. Within the preceding coverage, the insulating coating 140 can reduce the folds in the single-sided zone 101 and can also decrease the possibility of short circuits, whereas below the preceding coverage, the folds in the single-sided zone 101 is not significantly reduced, or the possibility of short circuits still exists.

The coverage represents a degree of coverage of the coating on a coated surface, and is a percentage of a total coating area of a to-be-coated zone minus an area of an exposed portion of the to-be-coated zone to the total coating area. For example, a coverage of 100% represents an area of the coating fully covering the entire coated surface. A coverage of 60% means that the coating covers only 60% of the coated surface, with the other 40% of the coated surface being exposed.

In a case that the insulating coating 140 is provided on part of the first surface 111 of the current collector 110 in the single-sided zone 101, this application provides a variety of embodiments.

In an embodiment, as shown in FIG. 6, along the width direction of the first electrode plate 100 (that is, a direction in which the tab 120 extends out of the current collector 110, direction y in the figure), the insulating coating 140 covers an width edge of the first electrode plate, whereas along the length direction of the first electrode plate 100 (that is, a direction in which the electrode plate is wound, direction x in the figure), a portion of the blank current collector 110 is exposed between the insulating coating 140 and the active substance layer 130 and from the insulating coating 140 to a length edge of the first electrode plate 100 (an edge perpendicular to the length direction). Specifically, along the length direction, a distance between the insulating coating 140 and a corresponding edge of the active substance layer 130 is a first distance d1, and a distance between the insulating coating 140 and the length edge is a second distance d2, where both of the first distance d1 and the second distance d2 range from 0 and 10 mm, and at least one of them is not 0. For example, the first distance d1 is 0, 1 mm, 3 mm, 5 mm, 7 mm, 9 mm, or in a range defined by any two of these values. For another example, the second distance d2 is 0, 2 mm, 4 mm, 6 mm, 8 mm, 10 mm, or in a range defined by any two of these values. It should be understood that the specific values of the first distance d1 and the second distance d2 may be set independently of each other, and d1 and d2 may be set to be equal or unequal. In some embodiments, the first distance d1 is selected to be 0, which means that the insulating coating 140 and the active substance layer 130 are adjacent to each other in the length direction of the first electrode plate 100, such that the insulating coating 140 and the active substance layer 130 do not overlap in the thickness direction of the electrode plate and are also not spaced apart in the length direction of the electrode plate, so as not to increase the thickness of the electrode plate nor to expose a blank current collector, thereby having no adverse effect on energy density and safety performance.

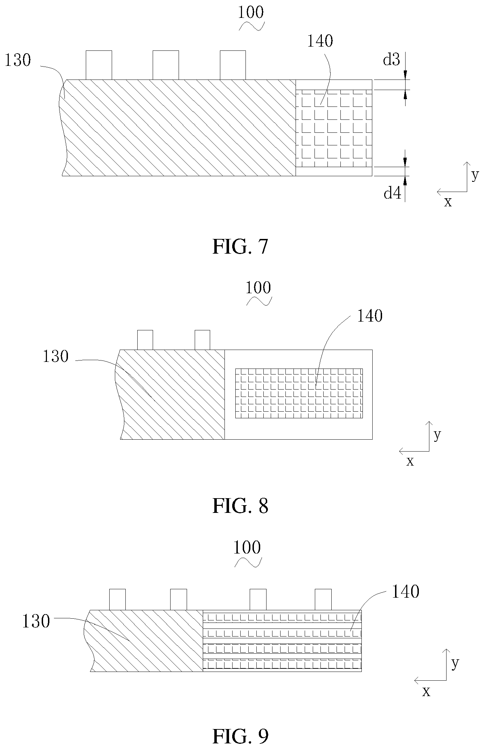

In an embodiment, as shown in FIG. 7, along the length direction of the first electrode plate 100 (direction x in the figure), the insulating coating 140 is adjacent to or partially overlaps the active substance layer 130, and the insulating coating 140 covers a length edge of the first electrode plate 100, in other words, there is no blank current collector exposed at the winding start end of the first electrode plate 100; and along the width direction of the first electrode plate 100 (direction y in the figure), the insulating coating 140 does not cover a width edge (an edge perpendicular to the width direction) of the first electrode plate 100, in other words, there is a blank current collector 110 exposed at the width edge of the first electrode plate 100. As shown in FIG. 7, on one side of the electrode plate with the tab 120 extending, a distance between an edge of the insulating coating 140 and an edge of the electrode plate is a third distance d3, and on the other side of the electrode plate, a distance between an edge of the insulating coating 140 and an edge of the electrode plate is a fourth distance d4, where both the third distance d3 and the fourth distance d4 range from 0 to 10 mm, and at least one of them is not 0. For example, the third distance d3 is 0, 1 mm, 3 mm, 5 mm, 7 mm, 9 mm, or in a range defined by any two of these values. For another example, the fourth distance d4 is 0, 2 mm, 4 mm, 6 mm, 8 mm, 10 mm, or in a range defined by any two of these values. It should be understood that the specific values of the third distance d3 and the fourth distance d4 may be set independently of each other, and d3 and d4 may be set to be equal or unequal. In some implementations, the third distance d3 is selected to be 0, which means that the insulating coating 140 fully covers the edge corresponding to the side of the electrode plate with the tab 120 extending, such that on the battery cell formed through winding, the head of the battery cell (that is, the side on which the tab 120 extends out) will not become thinner due to the existence of the blank current collector 110 at the edge of the electrode plate, so as not to affect the packaging.

In some other embodiments, as shown in FIG. 8, along both the length direction (direction x in the figure) of the first electrode plate 100 and the width direction (direction y in the figure) of the first electrode plate 100, the insulating coating 140 does not fully cover the first surface 111 of the current collector 110 in the single-sided zone 101, in other words, there is a spacing between the insulating coating 140 and the active substance layer 130 such that a blank current collector 110 is exposed, length edges and width edges on both sides of the first electrode plate 100 all expose the blank current collector 110 due to the lack of coverage of the insulating coating 140. A coverage area and a coverage region of the first electrode plate 100 are similar to those in the above-described embodiments, and are not repeated herein.

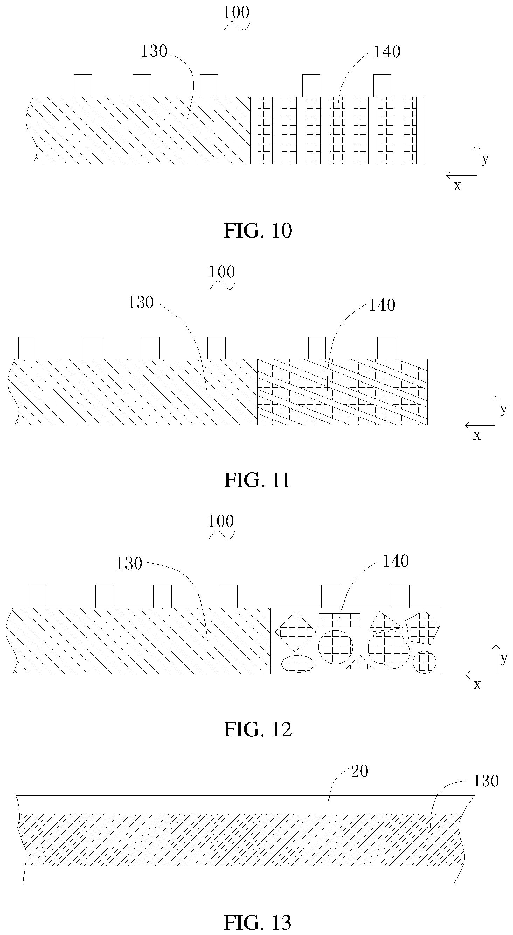

In some embodiments of this application, the insulating coating 140 may be provided on the first surface 111 in different shapes through different coating processes. In the embodiments shown in FIG. 9 to FIG. 11, the insulating coating 140 is distributed on the first surface 111 in a stripe pattern, where a distance between two adjacent stripes may be designed based on the coverage, and in some embodiments, the distance between two adjacent stripes is from 1 to 3 mm, so as to prevent the area of the exposed blank current collector 110 from being too large and thus affecting the safety performance of the electrode plate. In some other embodiments, such as the embodiment shown in FIG. 12, the insulating coating 140 is distributed on the first surface 111 in an island pattern, to be specific, the insulating coating 140 is distributed in non-contiguous zones on the first surface 111, and in a plane, each zone is presented as a regular circle, a triangle, a polygon, or the like, and each zone may alternatively be presented as an irregular figure, such as a zone surrounded by an irregular curve.

In some embodiments of this application, the insulating coating has a thickness of 1-100 µm. For example, in some embodiments, the thickness of the insulating coating is 10 µm, 20 µm, 30 µm, 40 µm, 50 µm, 60 µm, 70 µm, 80 µm, 90 µm, or in a range defined by any two of these values. The active substance layer has a thickness of 25-150 µm. For example, in some embodiments, the thickness of the insulating coating is 30 µm,40 µm, 50 µ µm, 60 µm, 70 µm, 80 µm, 90 µm, 100 µm, 110 µm, 120 µm, 130 µm, 140 µm, 150 µm, or in a range defined by any two of these values.

In some embodiments, the thickness of the insulating coating is less than or equal to the thickness of the active substance layer. In this way, the thickness of the insulating coating does not significantly affect an overall thickness of the electrode plate, and thus does not adversely affect an energy density of the electrochemical apparatus. Preferably, the thickness of the insulating coating is less than the thickness of the active substance layer, such that a thickness of the winding start end of the first electrode plate can be reduced, so as to increase the energy density of the electrochemical apparatus.

The thickness of the insulating coating and the thickness of the active substance layer mentioned above can be tested as follows: intercepting an electrode plate sample with a length of 100 mm, testing thicknesses of the electrode plate at 10 different positions using a universal thickness gauge, and taking an average value as the thickness of the electrode plate. If the thickness of the electrode plate coated with the active substance layer on both sides is D₁, the thickness of the electrode plate coated with the active substance layer on one side and the insulating coating on the other side is D₂, the thickness of the active substance layer is Dₐ=(D1-D)/2, and the thickness of the insulating coating is Dᵢ=D₂-Dₐ-D, where D represents the thickness of the current collector.

In some embodiments of this application, the current collector of the first electrode plate has a thickness of 4-10 µm. Preferably, in some embodiments of this application, the current collector of the first electrode plate has a thickness of 4-6 µm. As the insulating coating is provided on the single-sided zone at the winding start end to counteract the curling force of the single-sided zone of the first electrode plate during winding, this application can reduce the cold-pressed folds in the single-sided zone even if the thickness of the current collector is thinner than that of a current collector of a conventional battery cell, whereas the thickness of the current collector of the conventional battery cell, such as an anode copper foil, usually needs to be designed to be 8-10 µm. Further, a thinner current collector can save more space in the battery cell, thereby increasing the energy density of the battery cell.

In some embodiments of this application, a composition of the insulating coating includes inorganic particles and a binder. Based on a total weight of the insulating coating, the inorganic particles have a mass percentage of 70% to 99.7%. For example, the mass percentage of the inorganic particles is 75%, 80%, 85%, 90%, 95%, or in a range defined by any two of these values. Based on the total weight of the insulating coating, the binder has a mass percentage of 0.3% to 30%. For example, the mass percentage of the binder is 0.5%, 0.7%, 1%, 5%, 10%, 15%, 20%, 25%, or in a range defined by any two of these values. With the mass percentages of the inorganic particles and the binder within the foregoing ranges, it can ensure that the insulating coating has a good adhesion on the surface of the current collector, is not easy to come off during winding of the electrode plate, and also is not easy to come off in the battery cell so as not to affect the safety performance.

In some embodiments of this application, the insulating coating further includes a thickener with a mass percentage of 0.3% to 20% based on the total weight of the insulating coating. For example, the percentage of the thickener is 0.5%, 0.7%, 1%, 5%, 10%, 15%, or in a range defined by any two of these values. The thickener can increase the viscosity of the insulating coating in a slurry state and facilitate the application of an insulating coating slurry to the current collector.

In some embodiments of this application, the inorganic particles include at least one of aluminum oxide, zinc oxide, calcium oxide, silicon oxide, zirconium oxide, magnesium oxide, titanium oxide, hafnium dioxide, tin oxide, ceric oxide, nickel oxide, yttrium oxide, silicon carbide, aluminum hydroxide, magnesium hydroxide, calcium hydroxide, barium sulfate, or boehmite.

In some embodiments of this application, the binder includes at least one of a homopolymer of vinylidene fluoride, a copolymer of vinylidene fluoride, a copolymer of hexafluoropropylene, polystyrene, polyphenylene vinylene, sodium polyethyleneate, potassium polyethyleneate, polymethyl methacrylate, polyethylene, polypropylene, or polytetrafluoroethylene.

In some embodiments of this application, the thickener includes at least one of carboxymethyl cellulose, hydroxypropyl cellulose, hydroxypropyl methyl cellulose.

In some embodiments of this application, the first electrode plate is an anode electrode plate, and correspondingly the second electrode plate is a cathode electrode plate. In this way, the cathode electrode plate can be provided at the outermost ring layer of the battery cell for termination, as there is less electrochemical corrosion between the current collector aluminum foil of the cathode and an aluminum-plastic film of a packaging bag, which can improve the safety performance of the electrochemical apparatus. In some embodiments of this application, the first electrode plate is a cathode electrode plate, and correspondingly the second electrode plate is an anode electrode plate.

In some embodiments of this application, the anode electrode plate typically include an anode current collector and an anode active material layer, where the anode current collector may include a copper foil, a copper alloy foil, a nickel foil, a stainless steel foil, a titanium foil, a nickel foam, a copper foam, or a composite current collector. The anode active substance layer may include a cathode active material, a conductive agent, and a binder. A type of the anode active material is not particularly limited, provided that the objective of this application can be achieved. For example, the anode active material may include at least one of natural graphite, artificial graphite, a mesocarbon microbead (MCMB), hard carbon, soft carbon, silicon, a silicon-carbon composite, SiOx (0<x<2), a Li-Sn alloy, a Li-Sn-O alloy, Sn, SnO, SnO2, spinel-structure lithium titanate Li4Ti5O12, a Li-Al alloy, lithium metal, or the like. The conductive material may include: a carbon-based material (for example, natural graphite, artificial graphite, carbon black, acetylene black, Ketjen black, and carbon fiber), a metal-based material (for example, metal powder, and metal fiber, including copper, nickel, aluminum, silver, and the like), a conductive polymer (for example, a polyphenylene derivative), and any mixture thereof. The binder may include at least one of polyvinylidene fluoride, polytetrafluoroethylene, fluorinated rubber, polyurethane, styrene-butadiene rubber, polyacrylic acid, sodium polyacrylate, polyvinyl alcohol, alginic acid, or sodium alginate. In this application, neither a thickness of the anode current collector nor a thickness of the anode active substance layer is particularly limited, provided that the objectives of this application can be achieved. For example, the thickness of the anode current collector ranges from 4 µm to 10 µm, and the thickness of the anode active substance layer ranges from 20 µm to 150 µm.

In some embodiments of this application, the cathode electrode plate includes a cathode current collector and a cathode active substance layer. The cathode electrode current collector may include an aluminum foil, an aluminum alloy foil, a composite current collector, or the like. The cathode active substance layer includes a cathode active material. The cathode active material may include at least one of the following: lithium nickel cobalt manganese oxide (811, 622, 523, 111), lithium nickel cobalt aluminate, lithium iron phosphate, lithium-rich manganese-based materials, lithium cobalt oxide, lithium manganate, lithium iron manganese phosphate, lithium titanate, or the like. In this application, thicknesses of the cathode current collector and the cathode active substance layer are not particularly limited, provided that the objectives of this application can be achieved. For example, the cathode current collector has a thickness of 4 µm to 20 µm, and the cathode active substance layer has a thickness of 20 µm to 150 µm.

In some embodiments of this application, the cathode electrode plate or anode electrode plate is provided with a tab through die cutting. A cathode electrode tab material includes at least one of aluminum (Al) or an aluminum alloy, and the anode electrode tab material includes at least one of nickel (Ni), copper (Cu), or nickel-plated copper (Ni-Cu). In other embodiments, the anode electrode tab and the cathode electrode tab are welded to a blank current collector.

In some embodiments of this application, the separator is configured to separate the first electrode plate from the second electrode plate so as to avoid the first electrode plate and the second electrode plate coming into contact with each other, thereby avoiding an internal short circuit in the battery cell. The separator can be infiltrated by the electrolyte to allow charged ions to pass through to form an electrical cycle. Specifically, the separator includes a substrate and an adhesive layer disposed on a surface of the substrate, where the adhesive layer can be infiltrated by the electrolyte and bond the separator to the cathode electrode plate or the anode electrode plate, so as to inhibit the volume expansion of the battery cell in the charging and discharging cycle.

In some embodiments of this application, the substrate of the separator may be selected from at least one of a polyethylene (PE) and polypropylene (PP)-based polyolefin (PO) separator, a polyester film (for example, a polyethylene terephthalate (PET) film), a cellulose film, a polyimide film (PI), a polyamide film (PA), a spandex or aramid film, a woven film, a non-woven film (non-woven fabric), a microporous film, a composite film, a separator paper, a laminated film, or a spinning film. In some embodiments, the material of the substrate of the separator is polypropylene, which is good for preventing short-circuiting and can enhance the stability of the battery through the turn-off effect, and polypropylene generally has good affinity with the polymer, which is conducive to improving the bonding effect between the substrate and the adhesive layer.

In some embodiments of this application, the adhesive layer provided on the substrate includes a polymer and ceramic particles, where the polymer is selected from at least one of polyvinylidene fluoride, a vinylidene fluoride-hexafluoropropylene copolymer, a styrene-butadiene polymer, polyamide, polyacrylonitrile, polyoxyethylene, polyacrylate, polyacrylic acid, polyacrylate, sodium carboxymethyl cellulose, polyvinylpyrrolidone, polyvinyl ether, polymethacrylate, polytetrafluoroethylene, or polyhexafluoropropylene. The foregoing polymer has a high bonding property, and there are certain pores between the polymer particles, so it is conducive to bonding the separator to the electrode plate, and can also ensure the ion passage rate of the separator. The ceramic particles are selected from at least one of silica, aluminum oxide, magnesium dioxide, titanium dioxide, zirconium dioxide, zinc dioxide, hafnium dioxide, tin oxide, ceric oxide, nickel oxide, zinc oxide, calcium oxide, boehmite, aluminum hydroxide, magnesium hydroxide, calcium hydroxide, or barium sulfate. The ceramic particles in the adhesive layer can support the pores and keep the pores from being damaged, thereby reducing the probability of hole plugging in the separator due to compression and dissolution, making the battery cell have higher ion conductivity, and greatly improving the rate performance and the cycling performance of the battery cell. In addition, the ceramic particles can increase the heat resistance of the separator and improve the safety performance of the battery cell. In some embodiments of this application, the inorganic particles of the insulating coating and the ceramic particles of the adhesive layer are independently provided, and the parameters such as types, amounts, and particle sizes of the inorganic particles and the ceramic particles may be selected to be the same or different.

The electrochemical apparatus of this application further includes an electrolyte, where both the electrolyte and the battery cell are accommodated in the housing. The electrolyte may be at least one of gel electrolyte, solid electrolyte, and liquid electrolyte, and the liquid electrolyte includes a lithium salt and a non-aqueous solvent. In some embodiments of this application, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ may be selected as the lithium salt because it can provide high ionic conductivity and improve the cycle performance. The non-aqueous solvent may include at least one of a carbonate compound, a carboxylate compound, an ether compound, or other organic solvents. The carbonate compound may be at least one of a linear carbonate compound, a cyclic carbonate compound, or a fluorocarbonate compound. The linear carbonate compound may include at least one of dimethyl carbonate (DMC), diethyl carbonate (DEC), dipropyl carbonate (DPC), methyl propyl carbonate (MPC), ethylene propyl carbonate (EPC), methyl ethyl carbonate (MEC), or the like. The cyclic carbonate compound may include at least one of ethylene carbonate (EC), propylene carbonate (PC), butylene carbonate (BC), vinyl ethylene carbonate (VEC), or the like. The fluorocarbonate compound may include at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or the like. The carboxylate compound may include at least one of methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, or the like. The ether compound may include at least one of dibutyl ether, tetraglyme, diglyme, 1,2-dimethoxyethane, 1,2-diethoxyethane, ethoxymethoxy ethane, 2-methyltetrahydrofuran, tetrahydrofuran, or the like. The another organic solvent may include at least one of dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, or the like.

In some embodiments of this application, the housing includes at least one of an aluminum-plastic film, an aluminum housing, a steel housing, or a plastic housing, and there is no particular limitation on the housing in this application, provided that the objective of this application can be achieved.

The following further describes this application with reference to specific embodiments. It should be understood that these embodiments are merely intended to illustrate this application but not to limit the scope of this application.

### Example 1 Preparation of first electrode plate

An anode active substance layer slurry and an insulating coating slurry were prepared. An anode active substance artificial graphite, a binder styrene-butadiene rubber, and a thickener carboxymethyl cellulose were mixed at a mass ratio of 96:3:1, and stirred homogeneously to prepare the anode active substance layer slurry. Inorganic particles alumina particles, a binder styrene-butadiene rubber, and a thickener carboxymethyl cellulose were mixed at a weight ratio of 85:10:5, and stirred homogeneously to prepare the insulating coating slurry.

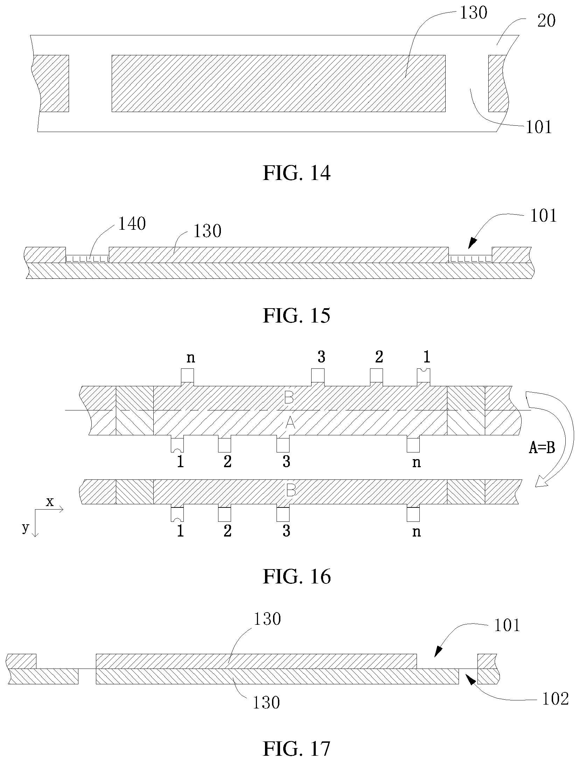

As shown in FIG. 13, the active substance layer slurry was continuously applied on a second surface of a copper foil 20 with a thickness of 5 µm. After the second surface of the copper foil was coated, the active substance layer slurry was discontinuously applied on a first surface of the copper foil 20 as shown in FIG. 14, so as to expose a blank current collector 101, the insulating coating slurry was discontinuously applied on the blank current collector 101, and after being cold pressed, an intermediate form of the electrode plate, as shown in FIG. 15, was prepared. The electrode plate had a thickness of 117.3 µm, and the insulating coating 140 had a thickness of 35 µm, where compacted density was 1.755 g/cc.

Then the tab was suffered from die cutting and slitting, as shown in FIG. 16. After die cutting, the tab was slit from the center of the electrode plate in the intermediate form along a winding direction to prepare two first electrode plate strips A and B, namely, first electrode plate strip of battery cell A and first electrode plate strip of battery cell B, where the first electrode plate strip of battery cell A is the same as the first electrode plate strip of battery cell B, and each include a plurality of first electrode plates connected end to end. Therefore, after the first electrode plate strip of battery cell A and the first electrode plate strip of battery cell B were cut, the same first electrode plate of battery cell A and first electrode plate of battery cell B were prepared. Therefore, battery cell A and battery cell B made of the first electrode plates prepared using the foregoing method were the same.

### Comparative Example 1 Preparation of first electrode plate

An anode active substance artificial graphite, a binder styrene-butadiene rubber, and a thickener carboxymethyl cellulose were mixed at a mass ratio of 96:3:1, and stirred homogeneously to prepare an anode active substance layer slurry. As shown in FIG. 17, the active substance layer slurry was discontinuously applied on a first surface and a second surface of a copper foil with a thickness of 6 µm, and, after being cold pressed, an intermediate form of electrode plate with a single-sided zone 101 and a foil free zone 102 was prepared in the winding direction.

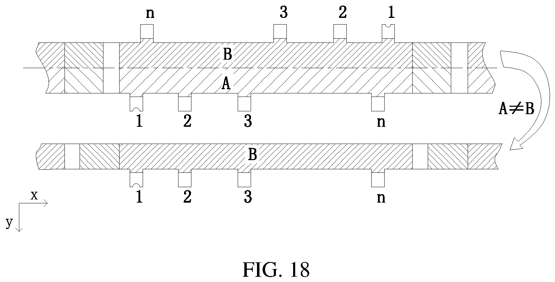

Then the tab was suffered from die cutting and slitting, as shown in FIG. 18. After die cutting, the tab was slit from the center of the electrode plate in the intermediate form along a winding direction to prepare two first electrode plate strips A and B, namely, first electrode plate strip of battery cell A and first electrode plate strip of battery cell B, where the first electrode plate strip of battery cell A and the first electrode plate strip of battery cell B were opposite at the winding start end of the electrode plate. Specifically, when directions of the tabs in FIG. 18 were downward as shown in the figure, the winding start end of the first electrode plate strip of battery cell A was on the right side, and the winding start end of the first electrode plate strip of battery cell B was on the left side. Therefore, the winding start ends of the first electrode plate of battery cell A and the first electrode plate of battery cell B prepared through cutting were opposite, and battery cell A and battery cell B made of the first electrode plates prepared using the foregoing method were different.

It should be noted that the preparation parameters of Comparative Example 1 were the same as the corresponding preparation parameters in Example 1.

Referring together to Table 1, Table 1 shows the test data of the wound battery cell of Example 1 and the electrochemical apparatus of Comparative Example 1. As can be seen from Table 1, after the first electrode plate was wound, the proportion of folds in the single-sided zone of the wound battery cell of Example 1 was significantly smaller than the proportion of folds in the single-sided zone of the wound battery cell of Comparative Example 1, and folds in the winding start end of the first electrode plate was significantly reduced in Example 1.

**Table 1**

| Group | Number of battery cells/piece | Number of folds/piece in single-sided zone | Proportion of folds |
|---|---|---|---|
| Comparative Example 1 | 586 | 61 | 10.4% |
| Example 1 | 671 | 0 | 0 |

In addition, as can be seen from the preceding preparation process, the first electrode plate of battery cell A and the first electrode plate of battery cell B of Comparative Example 1 have different winding start ends, which need to be classified during the preparation of the wound battery cell, so as to prepare battery cell A and battery cell B by winding them from different directions. In Example 1, the first electrode plate of battery cell A and the first electrode plate of battery cell B are the same, so during preparation of the wound battery cell, the first electrode plates can be wound from the same direction without classification, which in turn can improve production efficiency and reduce production costs.

The foregoing descriptions are merely the embodiments of this application, but are not intended to limit the patent scope of this application. Any equivalent structural or equivalent process transformations made by using the content of the specification and accompanying drawings of this application are directly or indirectly applied in other related technical fields, and are included in the patent protection scope of this application in the same way.

## Claims

1. An electrochemical apparatus, comprising a battery cell, the battery cell comprises a first electrode plate, a separator, and a second electrode plate wound together to form the battery cell, wherein the first electrode plate comprises:
a current collector, comprising a first surface facing toward the interior of the battery cell and a second surface facing away from the interior of the battery cell;
a tab, electrically connected to the current collector and extending out of the current collector; and
an active substance layer, provided on the first surface and the second surface of the current collector; wherein a winding start end of the first electrode plate is provided as a single-sided zone, an insulating coating is provided on the first surface of the current collector located in the single-sided zone, and the active substance layer is provided on the second surface of the current collector located in the single-sided zone.

2. The electrochemical apparatus according to claim 1, wherein along a winding direction of the first electrode plate, the insulating coating is adjacent to or partially overlaps the active substance layer.

3. The electrochemical apparatus according to claim 1, wherein the insulating coating has a thickness of 1-100 µm and the active substance layer has a thickness of 25-150 µm.

4. The electrochemical apparatus according to claim 3, wherein the thickness of the insulating coating is less than or equal to the thickness of the active substance layer.

5. The electrochemical apparatus according to claim 1, wherein the insulating coating is provided on part of the first surface in the single-sided zone, or the insulating coating is provided on all of the first surface in the single-sided zone.

6. The electrochemical apparatus according to claim 5, wherein the insulating coating is distributed in a stripe or island pattern on the first surface in the single-sided zone.

7. The electrochemical apparatus according to claim 1, wherein the insulating coating comprises inorganic particles and a binder, the inorganic particles comprising at least one of aluminum oxide, zinc oxide, calcium oxide, silicon oxide, zirconium oxide, magnesium oxide, titanium oxide, hafnium dioxide, tin oxide, ceric oxide, nickel oxide, yttrium oxide, silicon carbide, aluminum hydroxide, magnesium hydroxide, calcium hydroxide, barium sulfate, or boehmite, and the binder comprising at least one of homopolymer of vinylidene fluoride, copolymer of vinylidene fluoride, copolymer of hexafluoropropylene, polystyrene, polyphenylene vinylene, sodium polyethyleneate, potassium polyethyleneate, polymethyl methacrylate, polyethylene, polypropylene, or polytetrafluoroethylene.

8. The electrochemical apparatus according to claim 1, wherein the first electrode plate is an anode electrode plate.

9. The electrochemical apparatus according to claim 1, wherein the current collector has a thickness of 4-10 µm.

10. An electronic apparatus, comprising the electrochemical apparatus according to any one of claims 1 to 9, wherein the electrochemical apparatus is configured to supply power to the electronic apparatus.
